# EUROPÄISCHE PATENTSCHRIFT

(11) **EP 4 286 694 B1**
(45) Veröffentlichungstag und Bekanntmachung des Hinweises auf die Patenterteilung: **16.07.2025**
(21) Anmeldenummer: 23175646.1
(22) Anmeldetag: 26.05.2023
(51) Int. Cl.: F16B 2/14, F16B 3/00, F16B 5/06, F16B 7/04, F16B 21/08

(54) **BEFESTIGUNGSANORDNUNG ZUR MECHANISCHEN, REVERSIBLEN FIXIERUNG EINES BEFESTIGUNGSELEMENTES IN EINEM BAUELEMENT**
FASTENING ARRANGEMENT FOR MECHANICALLY AND REVERSIBLY FASTENING A FASTENING ELEMENT IN A COMPONENT
DISPOSITIF DE FIXATION POUR LA FIXATION MÉCANIQUE ET RÉVERSIBLE D'UN ÉLÉMENT DE FIXATION DANS UN ÉLÉMENT DE CONSTRUCTION

(30) Priorität: 31.05.2022 DE 102022113678
(43) Veröffentlichungstag der Anmeldung: 06.12.2023
(73) Patentinhaber: Herzberg, Nico, 01328 Dresden (DE); Gauser, Tony, 09380 Thalheim (DE); Campos, Javier Gil, 01097 Dresden (DE)
(72) Erfinder: Gauser, Tony, 09380 Thalheim (DE); Campos, Javier Gil, 01097 Dresden (DE)
(74) Vertreter: Sperling, Thomas

(56) Entgegenhaltungen:
- WO-A1-2006/076934
- DE-A1- 1 803 365
- DE-A1- 2 258 012
- DE-A1- 4 325 024
- DE-B1- 2 952 613
- DE-U1- 202012 001 544

## Beschreibung

Die Erfindung betrifft eine Befestigungsanordnung, welche der Verbindung eines Befestigungselementes in einem Bauelement dient. Das Befestigungselement zeichnet sich dadurch aus, dass es einerseits in einem plattenförmigen und relativ dünnen Bauelement mechanisch reversibel fixiert werden kann und andererseits ein Aufnahmeelement aufweist, welches diverse Bauteile aufnehmen kann. Damit ist die Befestigungsanordnung in besonderer Weise geeignet, beispielsweise Beschläge in beziehungsweise an plattenförmigen dünnen Bauelementen zu fixieren.

Anwendungsgebiete der Erfindung bestehen insbesondere dort, wo dünne plattenförmige Bauelemente eingesetzt werden sollen und dabei Befestigungselemente in der Art von Beschlägen oder Scharnieren an diesen angebracht oder in diesen fixiert werden sollen. Damit ergeben sich Einsatzgebiete beispielsweise im Fahrzeugbau und dabei insbesondere im Innenausbau von Wohnmobilen sowie vielfältige Anwendungen im Möbel- und Messebau.

Im Stand der Technik sind diverse Befestigungsanordnungen für plattenförmige Bauelemente, wie Verkleidungen, Verschalungen, Fassadenelemente und Ähnliches bekannt. Dabei erfordern die bekannten Befestigungsanordnungen zur Fixierung der Befestigungselemente daran plattenförmige Bauelemente, die in der Regel Dicken von mehr als 12 mm aufweisen müssen. Wird diese Mindestdicke unterschritten, so werden diese Bauelemente beispielsweise durch Schraubverbindungen, Nietverbindungen oder Verkleben mit dünnen plattenförmigen Bauelementen verbunden.

Nachteilig ist dabei, dass die Schrauben oder Nieten auch nach der Befestigung sichtbar bleiben, wohingegen eine Klebverbindung nicht lösbar und damit nicht reversibel ist und zudem auch keinen Toleranzausgleich bietet.

Zudem ist das Aufschrauben beziehungsweise Kleben in der Regel keine flächenbündige Verbindung.

Bei Fassadenelementen können nicht flächenbündige Blechbiegeteile zum Einsatz kommen, die, sofern sie nicht von anderen Bauteilen überdeckt werden, sichtbar bleiben.

Damit lässt sich als nachteilig an den Lösungen nach dem Stand der Technik feststellen, dass insbesondere für dünne plattenförmige Werkstoffe Befestigungsanordnungen verwendet werden, die entweder sichtbar, nicht wieder lösbar oder nicht flächenbündig ausgeführt sind.

Nach dem Stand der Technik verwendete Beschläge als Befestigungselemente bedürfen zum Einbringen einer Materialdichte von mindestens 7 mm bei einem plattenförmigen Bauelement.

Zudem ist als nachteilig an den Lösungen nach dem Stand der Technik bekannt, dass ein werkzeugloses Einbringen von Befestigungselementen in ein plattenförmiges Bauelement sowie ein Toleranzausgleich durch die Befestigungselemente und die reversible Lösbarkeit der Befestigungselemente von den Bauelementen nach der Fixierung und eine flächenbündige Ausgestaltung vom Befestigungselement im Bauelement nicht in Kombination zu finden sind.

Die DE 43 25 024 A1 betrifft ein Glasbauelement für die rahmenlose mechanische Befestigung an einer Trägerkonstruktion. Die zu lösende Aufgabe besteht darin, ein Glasbauelement der eingangs genannten Art so auszubilden, dass der Herstellprozess der Verbundglasscheibe nicht durch das Befestigungselement beeinträchtigt wird. Diese Aufgabe wird dadurch gelöst, dass das Befestigungselement derart mehrteilig ausgebildet ist, dass es durch Veränderung der gegenseitigen Lage seiner einzelnen Teile einerseits in die einseitig offene Bohrung der fertigen Verbundglasscheibe einführbar ist und andererseits den Formschluss mit der hinterschnittenen Bohrung in der Endlage der einzelnen Teile erreicht, wobei die Einzelteile in dieser Endlage zueinander festlegbar sind.

Die DE 20 2012 001 544 U1 offenbart einen Hinterschnittanker und ein Befestigungssystem mit einem Hinterschnittanker. Die zu lösende Aufgabe besteht darin, einen gattungsgemäßen Hinterschnittanker beziehungsweise ein Befestigungssystem mit dem gattungsgemäßen Hinterschnittanker bereitzustellen, mittels dessen das zu befestigende Bauteil unter geringer mechanischer Belastung befestigt werden kann. Diese Aufgabe wird dadurch gelöst, dass die Spreizelemente in Einsetzrichtung vor dem Vorsprung jeweils eine Sollbiegestelle aufweisen, an der die Spreizelemente zum Eingriff in den Hinterschnitt radial verbiegbar sind.

Die DE 29 52 613 B1 offenbart einen Anschlussprofilstreifen, insbesondere an Vorrichtungen zum Überbrücken von Dehnungsfugen in Brücken oder Bauwerken. Die zu lösende Aufgabe besteht darin, einen Anschlussprofilstreifen zu schaffen, welcher einfach und ohne großen Kraftaufwand in hinterschnittenen Ausnehmungen der Fugenränder einsetzbar ist. Diese Aufgabe wird dadurch gelöst, dass eine Einkerbung, auf der dem Nutgrund abgewandten Innenseite der Anschlussleiste angeordnet ist, dass zum Einsetzen in die Nut des Fugenrandkörpers die Anschlussleiste zur Fugenmitte hin abgeknickt ist und ihre Einkerbung geöffnet ist und dass die Anschlussleiste in ihrer endgültigen Position mindestens gestreckt und die Einkerbung geschlossen ist.

Die DE 18 03 365 A1 offenbart ein Schloss für dicke, plattenförmige Elemente. Die zu lösende Aufgabe besteht darin, eine Verbindung der oben erwähnten Art anzugeben, welche große Kraftbeanspruchungen, besonders in der Ebene der Elemente verträgt, und die zugleich ohne Aufwand von großen Einzelkräften oder Drehmomenten in den und aus dem verriegelnden Zustand gebracht werden kann. Zur Lösung ist es vorgesehen, dass jedes der plattenförmigen Elemente längs einer Kante eine halbkreisförmige Aussparung hat, deren Boden mit einem im wesentlichen halbkreisförmigen, in der Mitte angebrachten, hervortretenden Führungsteil, dessen Höhe kleiner als die Tiefe der Aussparung ist, versehen ist, und dass das abnehmbare Glied aus zwei hauptsächlich gleich großen Schlossteilen besteht, die zusammen einen Umdrehungskörper bilden, der die Aussparungen im Wesentlichen ausfüllen kann.

Aus der DE 22 58 012 A1 ist eine Verriegelungs- oder Verbindungsvorrichtung zum gegenseitigen Zusammenhalten von zwei oder mehr einander gegenüberliegenden Gegenständen bekannt. Vorgesehen ist es, dass die Verriegelungs- oder Verbindungsvorrichtung einen Körper aufweist, der so angeordnet beziehungsweise ausgebildet ist, dass er die Gegenstände verkettet, dass der Körper eine Körperfläche aufweist, die einen Drehkörper begrenzt, dass der Drehkörper eine Drehachse aufweist, dass der Körper in wenigstens zwei Teile entlang wenigstens einer Trennfläche aufgeteilt ist, die zwischen den Gegenständen liegt, wenn sie einander gegenübergestellt sind, dass der Körper um die Drehachse derart drehbar ist, dass in der einen Position die Enden der unterteilten Teile im Wesentlichen mit der Trennfläche fluchten und wenn der Körper um die Drehachse aus dieser einen Position herausgedreht wird, jeder Teil wenigstens zwei benachbarte einander gegenübergestellte Gegenstände verbindet.

Die WO 2006 / 076934 A1 offenbart eine Isolierglasscheibe, in welcher zwei einzelne Glasscheiben durch einen aus einem Hohlprofilstab oder aus linear verbundenen Hohlprofilstäben gebildeten, rahmenförmigen Abstandhalter auf Abstand gehalten werden. Die zu lösende Aufgabe besteht darin, einen Weg aufzuzeigen, wie Isolierglasscheiben preiswerter gestaltet und hergestellt werden können, ohne Abstriche in der Qualität der Abdichtung und des mechanischen Verbundes der Isolierglasscheibe in Kauf nehmen zu müssen. Dabei soll eine Eignung für das Herstellen großer Mengen standardisierter Isolierglasscheiben gegeben sein.

Die Aufgabe der Erfindung besteht nunmehr darin, eine Befestigungsanordnung zur mechanischen, reversiblen Fixierung eines Befestigungselementes in einem Bauelement zur Verfügung zu stellen. Besonders wünschenswert ist eine Lösung für dünne plattenförmige Bauelemente mit einer Dicke von ca. der 1,5-fachen Dicke des einzusetzenden Befestigungselementes beziehungsweise des Beschlagteils im Bauelement.

Die Aufgabe wird durch einen Gegenstand mit den Merkmalen gemäß Patentanspruch 1 sowie gemäß Patentanspruch 4 gelöst. Weiterbildungen sind in den abhängigen Patentansprüchen angegeben.

Die Aufgabe der Erfindung wird insbesondere durch eine Befestigungsanordnung zur mechanischen, reversiblen Fixierung eines Befestigungselementes in einem Bauelement gelöst, wobei das Befestigungselement aus einer Profilscheibe mit einer Keilflanke und einem Aufnahmeelement für Bauteile ausgebildet ist. Das vorzugsweise plattenförmige Bauelement weist eine Ausnehmung auf, die zur Oberfläche des Bauelementes hin eine Hinterschneidungsflanke aufweist. Die Ausnehmung ist beispielsweise in der Art eines flachen, mehr breiten als hohen Loches ausgeführt, welches an den seitlichen Begrenzungen eine mit der Keilflanke der Profilscheibe korrespondierende Hinterschneidung aufweist. Das Befestigungselement ist in einer Montagestellung in die Ausnehmung des Bauelementes einsetzbar und in eine Arretierungsstellung bewegbar. Die Keilflanke der Profilscheibe korrespondiert in der Arretierungsstellung des Befestigungselementes im Bauelement formschlüssig mit der Hinterschneidungsflanke, was zur Fixierung des Befestigungselementes im Bauelement führt.

Die Konzeption der Erfindung wird beispielhaft dadurch realisiert, dass ein einteiliger Beschlag am Befestigungselement zur lösbaren, verdeckten und flächenbündigen sowie toleranzausgleichenden werkzeuglosen sowie klebstofffreien Befestigung dünner, vornehmlich plattenförmiger, Bauteile an Konstruktionsbauteilen als Bauelementen angeordnet ist. Dies erfolgt beispielsweise über eine Rastleiste des Aufnahmeelementes als Teil des Befestigungselementes. Damit wird über die Befestigungsanordnung eine Schnittstellenbildung für handelsübliche Beschläge zur Verfügung gestellt.

Die Erfindung umfasst damit eine Befestigungsanordnung, mit welcher dünne plattenförmige Bauelemente mit einer Dicke der ca. 1,5-fachen Dicke der Profilscheibe des Befestigungselementes verdeckt und wieder lösbar an einer Unterkonstruktion oder aber mit anderen Bauteilen verbunden werden können. Bevorzugt sind derartige Befestigungsanordnungen im Möbelbau einsetzbar, wobei dort die Profilscheibe mit einer Dicke von beispielsweise 3 mm für Plattendicken der Bauelemente ab 4,5 mm eingesetzt werden kann. Je nach dem Material für das Befestigungselement oder Bauelement, wie Metall, Kunststoff, Glas, mineralische Werkstoffe, Holz und Holzwerkstoffe, können die Dickenangaben variieren.

Bevorzugt ist die Profilscheibe des Befestigungselementes derart dimensioniert, dass diese die Ausnehmung des Bauelementes in der Arretierungsstellung bündig ausfüllt. Überstehend ist somit lediglich das Aufnahmeelement des Befestigungselementes, an welchem je nach Funktion Beschläge, weitere Bauteile oder auch Bauelemente arretiert und damit mit dem Bauelement der Befestigungsanordnung verbunden werden.

Erfindungsgemäß ist das Befestigungselement einteilig ausgebildet. Darunter ist die Ausbildung des Befestigungselementes als ein Stück oder Bauteil zu verstehen. Damit entfallen aufwändige Montageprozesse oder Zwischenmontageprozesse und die Befestigungselemente sind kostengünstig herstellbar.

Bei einer erfindungsgemäßen Ausgestaltung der Erfindung weist die Befestigungsanordnung ein Befestigungselement mit einer Profilscheibe auf, die als Kreisscheibe mit einer über weite Abschnitte des Kreisbogens umlaufenden Keilflanke und mit einem Anschnitt ausgebildet ist. Dabei ist die Ausnehmung des Bauelementes korrespondierend mit einem Anschnitt versehen, so dass das Befestigungselement in der Montagestellung mit zueinander versetzten Anschnitten in die Ausnehmung des Bauelementes einsetzbar und in die Arretierungsstellung durch horizontales Verschwenken, auch als Verdrehen bezeichnet, bringbar ist. Die Keilflanke der Profilscheibe gelangt dabei in Eingriff mit der Hinterschneidungsflanke des Bauelementes, wodurch eine mechanische, reversible Fixierung des Befestigungselementes im Bauelement erfolgt. Wird das Befestigungselement in die Gegenrichtung verschwenkt, so wird die Verbindung gelöst.

Unter dem Anschnitt der Kreisscheibe ist zu verstehen, dass von einer Kreisscheibe ein Teil entlang einer Sehne abgeschnitten ist und die Kreisscheibe entlang dieser Sehne dann einen Anschnitt aufweist.

Bevorzugte Ausgestaltungen für das horizontale Verschwenken der Profilscheibe von der Montagestellung in die Arretierungsstellung bestehen darin, dass das Verschwenken als Drehrast in der Fläche oder als Drehrast an der Kante ausgebildet ist. Über eine Drehrast erfolgt eine Begrenzung der Drehbewegung bis in eine Raststellung.

Bei einer Drehrast in die Fläche erfolgt ein formschlüssiger Eingriff korrespondierender Elemente in die Fläche der Ausnehmung des Bauelementes. Bei einer Drehrast an der Kante erfolgt ein formschlüssiger Eingriff korrespondierender Elemente an der Kante der Keilflanke 10 des Befestigungselementes korrespondierend zur Kante der Hinterschneidungsflanke des Bauelementes.

Jeweils gelangen die Keilflanke der Profilscheibe in Eingriff mit der Hinterschneidungsflanke des Bauelementes.

Nach einer weiteren erfindungsgemäßen Ausgestaltung der Erfindung besteht das Befestigungselement der Befestigungsanordnung aus zwei über ein Scharnier verbundenen Profilscheiben, wobei die Profilscheiben gegenüberliegende runde Bereiche mit Keilflanken aufweisen, die in korrespondierende runde Bereiche mit Hinterschneidungsflanken in der Ausnehmung des Bauelementes eingreifen.

In der Montagestellung sind die Profilscheiben über das Scharnier zueinander winklig angeordnet beziehungsweise abgewinkelt zueinander positioniert und liegen somit nicht in einer Ebene. In dieser Stellung sind die Profilscheiben in die Ausnehmungen im Bauelement einsetzbar und durch orthogonales Verschwenken in der Art eines Hereinklappens in eine Arretierungsstellung in die Ebene des plattenförmigen Bauelementes verbringbar. Danach liegen die Profilscheiben in einer Ebene, wobei die Keilflanken der Profilscheiben in Eingriff mit den Hinterschneidungsflanken des Bauelementes gelangen und infolgedessen das Befestigungselement im Bauelement relativ zu diesem fixiert ist.

Bevorzugt ist das Aufnahmeelement des Befestigungselementes durch einen Spalt geteilt und beide Teile des Aufnahmeelementes sind mit je einer Profilscheibe verbunden. Das Befestigungselement wird über ein Arretierelement in Form eines O-Ringes oder einer Rasthülse auf dem Aufnahmeelement in der Arretierungsstellung gehalten. Das Arretierelement verhindert das ungewollte Herausschwenken des Befestigungselementes aus der Ausnehmung des Bauelementes und setzt die mechanische, reversible Fixierung des geteilten Aufnahmeelementes und somit die Fixierung des Befestigungselementes im Bauelement um.

Bevorzugt ist das Scharnier in dieser Ausgestaltungsform als Filmscharnier ausgebildet, wodurch auch eine einteilige Fertigung des Befestigungselementes möglich ist.

Von besonderem Vorteil ist, dass das Befestigungselement mittels additiver Herstellungsverfahren, wie dem 3D-Druck oder Laser-Sintern, als auch mit Urformverfahren, wie Spritzgießen sowie Fräsen und ähnlichen Herstellungsverfahren, erzeugbar ist.

Vorteilhaft weist das Aufnahmeelement ein Arretierungselement für weitere Bauteile auf, wobei das Arretierelement am Aufnahmeelement beispielsweise als Rastleiste oder als Wulstring ausgebildet ist.

Die Profilscheibe weist vorteilhaft eine Dicke von 3 mm auf und die Bauelemente sind plattenförmig ausgebildet und weisen eine 1,5- bis 2,5-fache Dicke der Profilscheibe auf.

Die Hinterschneidungsflanke und die Keilflanke weisen einen Hinterschneidungs- und Keilwinkel von 10° bis 60° auf. Besonders bevorzugt ist ein Hinterschneidungs- und Keilwinkel von 45°.

Eine vorteilhafte Ausgestaltung des Aufnahmeelementes besteht darin, dieses als Nutprofil auszubilden.

Weitere Vorteile der Erfindung bestehen zusammengefasst darin, dass eine verdeckte Montage von plattenförmigen Bauteilen auf einer Unterkonstruktion ermöglicht wird. Dabei ist die Montage klebstofffrei, werkzeuglos und durch die Einteiligkeit der Befestigungselemente benutzerfreundlich und einfach durchführbar.

Besonders bemerkenswert ist, dass mittels der vorgeschlagenen Befestigungsanordnung auf einfache Weise Fehlertoleranzen der Bauelemente und Bauteile ausgeglichen werden können.

Ein weiterer Vorteil besteht darin, dass die Befestigungselemente in einem Urformprozess oder additiv gefertigt werden können, so dass die Herstellung bei größtmöglicher Ausnutzung des Ausgangsmaterials erfolgt.

Die Erfindung ist darüber hinaus nahezu beliebig skalierbar, so dass sowohl miniaturisierte Anwendungen, wie Bauteile für die Mikroelektronik, als auch großskalierte Anwendungen, wie beispielsweise für das Baugewerbe, als Einsatzmöglichkeiten in Betracht kommen.

Besonders vorteilhaft ist die vielfältige Einsetzbarkeit des erfindungsgemäßen Prinzips. Es können Ausgestaltungen für verschiedenste Verbindungen von Bauteilen und Bauelementen miteinander realisiert werden. Dies erfolgt über die Anpassbarkeit des Aufnahmeelementes und der mit dieser verbundenen Arretierelemente, welche über unterschiedliche Nutgrößen oder Bolzenstärken an verschiedenste Einsatzgebiete anpassbar sind. Damit können Adaptionen von Standardbeschlägen bis hin zur Montageplatte für Scharniere an plattenförmigen Bauelementen fixiert werden.

Besonders vorteilhaft ist die Möglichkeit der Reduzierung der notwendigen Plattenstärken der Bauelemente um bis zu 50 %, mindestens jedoch aber um 33 %. Somit können in besonders vorteilhafter Weise dünne Platten als Bauelemente in Anwendungen eingesetzt werden, welche aus Gründen der Befestigung mit Befestigungsanordnungen aus dem Stand der Technik bisher nicht einsetzbar sind.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: Befestigungsanordnung im Querschnitt
- Fig. 2:: Befestigungselement in der Draufsicht
- Fig. 3:: Bauelement in der Draufsicht
- Fig. 4:: alternatives Befestigungselement im Querschnitt
- Fig. 5:: Befestigungselement in der Draufsicht
- Fig. 6:: Bauelement in der Draufsicht

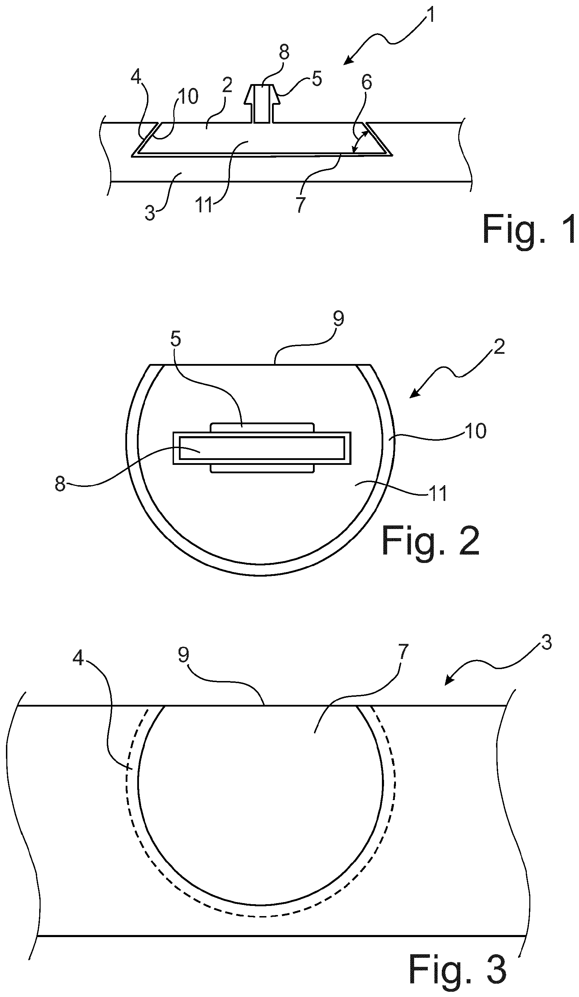

In **Figur 1** ist eine Befestigungsanordnung 1 im Querschnitt dargestellt. Die Befestigungsanordnung 1 besteht im Wesentlichen aus einem Befestigungselement 2, welches mit einem Bauelement 3 mechanisch und reversibel verbunden wird.

Am Befestigungselement 2 ist ein Aufnahmeelement 8 vorgesehen, welches Arretierelemente 5 für die Aufnahme und Fixierung von verschiedensten Bauelementen oder Bauteilen, wie Beschlägen, Scharnieren oder ähnliches, aufweist.

Um das Befestigungselement 2 auf der gegenüberliegenden Seite im Bauelement 3 zu verankern, weist das Befestigungselement 2 eine Profilscheibe 11 auf, die an ihren Rändern eine Keilflanke 10 ausbildet. Die Keilflanke 10 besitzt einen Hinterschneidungs- und Keilwinkel 6, der bevorzugt zwischen 10° und 60° ausgebildet ist. In besonders vorteilhafter Weise ist dieser Hinterschneidungs- und Keilwinkel 6 in einem Winkel von 45° ausgestaltet.

Das Bauelement 3 weist zur flächenbündigen Aufnahme der Profilscheibe 11 des Befestigungselementes 2 eine Ausnehmung 7 mit einer entsprechend an den Rändern ausgebildeten Hinterschneidungsflanke 4 auf. Die Hinterschneidungsflanke 4 wird beim Einbringen der Ausnehmung 7 in das Bauelement 3 in einem Winkel ausgestaltet, welcher mit dem Keilwinkel 6 der Keilflanke 10 des Befestigungselementes 2 korrespondiert.

Damit ist das Befestigungselement 2 auf der einen Seite mit der Profilscheibe 11 mit dem Bauelement 3 über die Keilverbindung formschlüssig verbunden und auf der anderen Seite ist das Befestigungselement 2 über das Aufnahmeelement 8 mit einem Bauelement, einem Bauteil, wie einem Beschlag, einem Scharnier oder Ähnlichem, verbunden. Das Befestigungselement 2 stellt somit eine Verbindung zwischen verschiedenen Objekten her oder am Befestigungselement 2 ist statt des Aufnahmeelementes 8 entsprechend das zu fixierende Bauteil selbst ausgebildet.

In **Figur 2** ist ein Befestigungselement 2 in der Draufsicht dargestellt. Das Befestigungselement 2 ist, wie zu Figur 1 beschrieben, aus einer Profilscheibe 11 mit einer ausgebildeten Keilflanke 10 sowie einem Aufnahmeelement 8 mit daran angeordnetem Arretierelement 5 ausgebildet. Die Profilscheibe 11 ist als kreisförmige Scheibe gestaltet, welche entlang einer Sehne des Kreises beschnitten ist. Dieser Teil der Kreisscheibe wird als Anschnitt 9 bezeichnet. Im Bereich des Anschnitts 9 weist die Profilscheibe 11 keine Keilflanke 10 auf und dieser Bereich dient dem Einführen des Befestigungselementes 2 in die Ausnehmung 7 des Bauelementes 3, welche korrespondierend Bereiche ohne Hinterschneidungsflanke 4 zum Einführen des Befestigungselementes 2 aufweist. Die Keilflanke 10 ist ansonsten entlang des Umfanges der verbleibenden kreisförmigen Profilscheibe 11 ausgeprägt. In der gezeigten Draufsicht ist das Aufnahmeelement 8 als sogenanntes Nutprofil gezeigt. Am Nutprofil, welches wiederum der Aufnahme von Bauteilen oder Bauelementen, wie beispielsweise Beschlägen oder Scharnieren dient, sind zu deren Fixierung Arretierelemente 5, hier gezeigt als Rastleiste, entlang des Nutprofils ausgebildet.

**Figur 3** zeigt ein Bauelement 3 mit einer Ausnehmung 7 für das nicht dargestellte Befestigungselement 2. Das Bauelement 3 weist in dieser Ausgestaltung an seinem Rand einen Anschnitt 9 auf, ähnlich dem Anschnitt 9 der Profilscheibe 11 gemäß Figur 2. Im Ausführungsbeispiel entspricht die Kantenlänge des Anschnittes 9 des Bauelementes 3 der Kantenlänge des Anschnittes 9 des Befestigungselementes 2 aus Figur 2.

Alternativ zu einem Anschnitt 9 am Rand des Bauelementes 3 sind in der ebenen Fläche eines plattenförmigen Bauelementes auch zwei sich überschneidende Ausnehmungen 7 ausgestaltbar, welche dem gleichen Ziel des Anschnittes 9, nämlich der Einführbarkeit des Befestigungselementes 2 in die Ausnehmung 7 des Bauelementes 3, dienen.

Die Hinterschneidungsflanke 4 ist in Figur 3 über eine gestrichelte Linie, da verdeckt, angedeutet.

Die Befestigungsanordnung 1 wird nachfolgend in kurz dargelegter Weise genutzt, um ein Befestigungselement 2 in einem Bauelement 3 mechanisch und reversibel, und somit wieder lösbar, zu fixieren.

Zunächst wird das Befestigungselement 2 in die Ausnehmung 7 des Bauelementes 3 eingelegt. Dies ist dann möglich, wenn, wie im hier gezeigten Ausführungsbeispiel, die Anschnitte 9 von Profilscheibe 11 und Bauelement 3 im rechten Winkel zueinander angeordnet werden. Im nächsten Schritt zur Verankerung des Befestigungselementes 2 im Bauelement 3 wird das Befestigungselement 2 in der Ausnehmung 7 des Bauelementes 3 liegend in der Ebene der Profilscheibe 11 und des Bauelementes 3 gedreht. Durch diese Drehung gelangt die Keilflanke 10 der Profilscheibe 11 in Eingriff mit der Hinterschneidungsflanke 4 des Bauelementes 3. Bevorzugt sind die Längen der Anschnitte 9 der Profilscheibe 11 und des Bauelementes 3 gleich ausgeführt. Um eine Drehrast auszuführen, ist eine Unterbrechung der Hinterschneidungsflanke 4 ausgeführt.

Im Ergebnis wird das Befestigungselement 2 mit einer formschlüssigen, schwalbenschwanzähnlichen Verbindung über die Keilflanke 10 und die Hinterschneidungsflanke 4 im plattenförmigen Bauelement 3 formschlüssig verankert. Bei einer entgegengesetzten Verschwenk- beziehungsweise Drehbewegung aus der Arretierungsstellung in die Montagestellung kann das Befestigungselement 2 aus der Ausnehmung 7 wieder entfernt werden, nachdem sich der Hinterschnitt gelöst hat. Dieses Wirkprinzip soll als mechanische Fixierung und reversible Lösbarkeit der Fixierung verstanden werden. Eine einfache Montage und Demontage über diese Keilverbindungen ist somit in vorteilhafter Weise möglich.

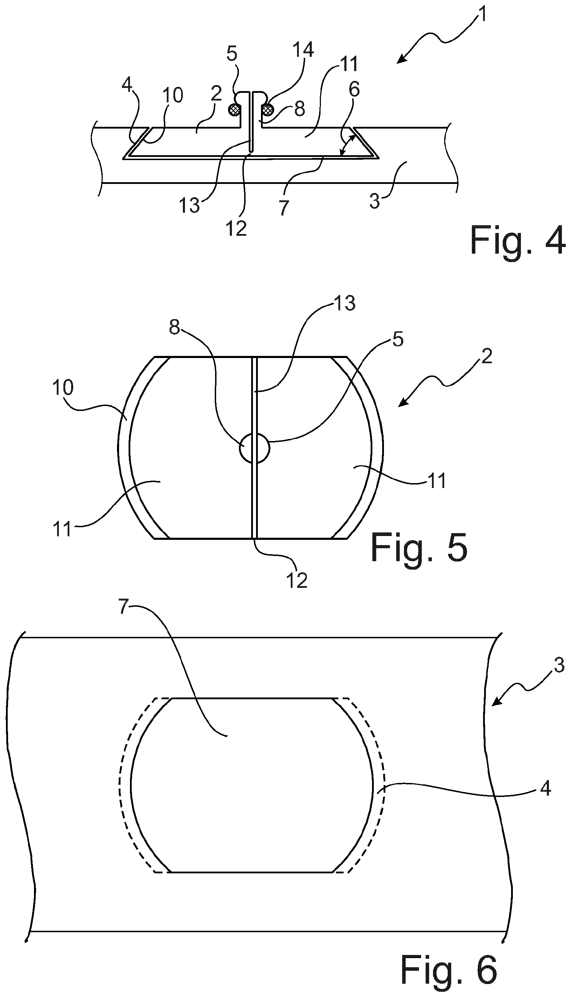

In **Figur 4** ist eine Befestigungsanordnung 1 in einer alternativen Ausgestaltung des Befestigungselementes 2 im Vergleich zur Ausführungsform gemäß der Figuren 1 bis 3 dargestellt.

In analoger Weise ist in der gezeigten Befestigungsanordnung 1 ein plattenförmiges Bauelement 3 mit einem Befestigungselement 2 mechanisch und reversibel formschlüssig verbunden. Das plattenförmige Bauelement 3 weist auch in dieser Ausgestaltung eine Ausnehmung 7 mit einer Hinterschneidungsflanke 4 auf. Gleichfalls ist am Befestigungselement 2 eine Keilflanke 10 ausgebildet, welche mit dem Hinterschneidungs- und Keilwinkel 6 korrespondierend zur Hinterschneidungsflanke 4 beziehungsweise deren Ausgestaltung im Bauelement 3 gestaltet ist. Das Aufnahmeelement 8 ist als zapfenartiges Element mit einem Spalt 13 geteilt ausgebildet. Auf einer Seite des Aufnahmeelementes 8 geht diese in die Profilscheibe 11 über, beziehungsweise ist mit dieser verbunden, und auf der anderen, der Profilscheibe abgewandten Seite ist ein Arretierelement 5 am Aufnahmeelement 8 ausgebildet. In der dargestellten Ausgestaltungsform ist das Arretierelement 5 als Wulst ausgebildet, über den ein O-Ring 14 fixiert wird. Der O-Ring 14 wird zum Abschluss der Montage des Befestigungselementes 2 im Bauelement 3 über das als Wulst ausgeführte Arretierelement 5 des Aufnahmeelementes geschoben und verhindert so, dass sich der Spalt 13 zwischen den beiden Teilen des Aufnahmeelementes 8 vergrößert und die Profilscheiben 11 über das Scharnier 12 zueinander klappen und so die Verbindung zwischen Befestigungselement 2 und Bauelement 3 unbeabsichtigt gelöst wird. Der Spalt 13 erstreckt sich bis zu einem Scharnier 12 an der Unterseite der Profilscheibe 11. Die Profilscheibe 11 ist in dieser Ausgestaltung durch den Spalt 13 in zwei über das Scharnier 12 verbundene und zueinander klappbar bewegliche Profilscheibenteile ausgebildet.

In **Figur 5** ist das Befestigungselement 2 in der Draufsicht gezeigt. Das zapfenartige Aufnahmeelement 8 weist an seinem distalen Ende ein Arretierelement 5, ausgebildet in Form einer Rastwulst, auf. Das Scharnier 12 am Boden der Profilscheibe 11 ist als Filmscharnier aus dem Material der Profilscheibe 11 ausgebildet, so dass letztlich auch das geteilte Befestigungselement 2 gemäß der hier beschriebenen Ausführungsform aus einem Stück gebildet ist und mittels entsprechender Fertigungsverfahren einteilig herstellbar ist.

Die Profilscheibe 11 ist von einer bogenförmigen Kontur umgeben, wobei die Keilflanken 10 in den Bogenelementen angeordnet sind. Die verbindenden Bereiche der die Profilscheibenteile verbindenden Profilscheibe 11 sind ohne Keilflanke 10 ausgebildet, um das Einführen des Befestigungselementes 2 in die Ausnehmung 7 des Bauelementes 3 zu ermöglichen.

In der **Figur 6** ist das Bauelement 3 mit der entsprechend gestalteten Ausnehmung 7 und der angedeuteten Hinterschneidungsflanke 4 in den bogenartigen Bereichen gezeigt. Die Verbindung zwischen den bogenartigen Bereichen ist ohne eine Hinterschneidungsflanke 4 ausgestaltet.

Die Arretierung des Befestigungselementes 2 im Bauelement 3 wird dadurch erreicht, dass das Befestigungselement 2 in die Ausnehmung 7 eingesetzt wird. Dazu wird das Befestigungselement 2 im Scharnier 12 geklappt, die beiden Profilscheibenteile liegen danach nicht in einer Ebene. In geklapptem Zustand, mit den Keilflanken 10 der Profilscheibenteile zu den Hinterschneidungsflanken 4 weisend, wird das Befestigungselement 2 in die Ausnehmung 7 des Bauelementes 3 eingesetzt und orthogonal, in Richtung der Ebene geschwenkt, wodurch die Keilflanken 10 der Profilscheibe 11 in die Hinterschneidungsflanke 4 des Bauelementes 3 eingreifen. Dabei bewegen sich die beiden Hälften der Profilscheibe 11 und die beiden Hälften des durch den Spalt 13 geteilten Aufnahmeelementes 8 zueinander. In der Arretierungsstellung werden die beiden Hälften des durch den Spalt 13 geteilten Aufnahmeelementes 8 über ein Sicherungselement, wie beispielsweise einen O-Ring 14 oder eine Rasthülse, in Wechselwirkung mit dem Arretierelement 5 des Aufnahmeelementes 8 gesichert.

Besonders vorteilhaft ist die Erfindung als einteiliger Beschlag ausgeführt, für dessen Verwendung in den zu fügenden Bauteilen Öffnungen vorgesehen sind. Der Hinterschnitt im Bauelement 3 wird beispielsweise manuell oder auch numerisch gesteuert eingebracht. Die Kontur der Ausnehmung 7 variiert je nach Anwendung als angeschnittener Kreis bei einer Anwendung im Kantenbereich oder in Form zweier überlagerter Kreise mit einem Versatz der Profilscheibendicke für eine Anwendung in der Fläche. In der Ausgestaltungsform in einem zweiten Bauteil kann eine punktförmige Bohrung für ein zapfenförmiges Aufnahmeelement 8 oder ein linienförmiges Öffnungsprofil in Form der Rastnut für ein Nutprofil als Aufnahmeelement 8 zur Anwendung kommen. Die Maße sind anpassbar und werden auf den jeweiligen Beschlag abgestimmt. Das Befestigungselement wird durch Schwenken in den Hinterschnitt eingeführt, wobei je nach Ausgestaltung sowohl das axiale als auch das orthogonale Schwenken in Bezug auf die kreisförmige oder als Langloch ausgeführte Ausnehmung 7 beziehungsweise Tasche ausgeführt werden.

### Bezugszeichenliste

- 1: Befestigungsanordnung
- 2: Befestigungselement
- 3: Bauelement
- 4: Hinterschneidungsflanke
- 5: Arretierelement / Rastleiste
- 6: Hinterschneidungs- und Keilwinkel
- 7: Ausnehmung
- 8: Aufnahmeelement
- 9: Anschnitt
- 10: Keilflanke
- 11: Profilscheibe
- 12: Scharnier
- 13: Spalt
- 14: O-Ring

## Patentansprüche

1. Befestigungsanordnung (1) zur mechanischen reversiblen Fixierung eines Befestigungselementes (2) in einem Bauelement (3), wobei das Befestigungselement (2) aus einer Profilscheibe (11) mit einer Keilflanke (10) und einem Aufnahmeelement (8) für Bauteile ausgebildet ist und wobei das Bauelement (3) eine Ausnehmung (7) aufweist, die zur Oberfläche des Bauelementes (3) hin eine Hinterschneidungsflanke (4) aufweist, wobei das Befestigungselement (2) in einer Montagestellung in die Ausnehmung (7) des Bauelementes (3) einsetzbar und in eine Arretierungsstellung bewegbar ist und wobei die Keilflanke (10) der Profilscheibe (11) mit der Hinterschneidungsflanke (4) des Bauelementes (3) in der Arretierungsstellung des Befestigungselementes (2) im Bauelement (3) formschlüssig korrespondiert, **dadurch gekennzeichnet, dass** das Befestigungselement (2) einteilig ausgebildet ist und die Profilscheibe (11) des Befestigungselementes (2) als Kreisscheibe mit einem Anschnitt (9) ausgebildet ist, wobei die Ausnehmung (7) des Bauelementes (3) korrespondierend einen Anschnitt (9) aufweist und wobei das Befestigungselement (2) in der Montagestellung mit zueinander versetzten Anschnitten (9) in die Ausnehmung (7) einsetzbar und in die Arretierungsstellung durch horizontales Verschwenken bringbar ist, wobei die Keilflanke (10) der Profilscheibe (11) in Eingriff mit der Hinterschneidungsflanke (4) des Bauelementes (3) gelangt.

2. Befestigungsanordnung (1) nach Anspruch 1, **dadurch gekennzeichnet, dass** die Profilscheibe (11) des Befestigungselementes (2) die Ausnehmung (7) des Bauelementes (3) in der Arretierungsstellung bündig ausfüllt.

3. Befestigungsanordnung (1) nach Anspruch 1 oder 2, **dadurch gekennzeichnet, dass** das horizontale Verschwenken der Profilscheibe (11) von der Montagestellung in die Arretierungsstellung als Drehrast in der Fläche oder als Drehrast an der Kante ausgebildet ist, wobei die Keilflanke (10) der Profilscheibe (11) in Eingriff mit der Hinterschneidungsflanke (4) des Bauelementes (3) gelangt.

4. Befestigungsanordnung (1) zur mechanischen reversiblen Fixierung eines Befestigungselementes (2) in einem Bauelement (3), wobei das Befestigungselement (2) aus einer Profilscheibe (11) mit einer Keilflanke (10) und einem Aufnahmeelement (8) für Bauteile ausgebildet ist und wobei das Bauelement (3) eine Ausnehmung (7) aufweist, die zur Oberfläche des Bauelementes (3) hin eine Hinterschneidungsflanke (4) aufweist, wobei das Befestigungselement (2) in einer Montagestellung in die Ausnehmung (7) des Bauelementes (3) einsetzbar und in eine Arretierungsstellung bewegbar ist und wobei die Keilflanke (10) der Profilscheibe (11) mit der Hinterschneidungsflanke (4) des Bauelementes (3) in der Arretierungsstellung des Befestigungselementes (2) im Bauelement (3) formschlüssig korrespondiert, **dadurch gekennzeichnet, dass** das Befestigungselement (2) einteilig ausgebildet ist und das Befestigungselement (2) aus zwei über ein Scharnier (12) verbundenen Profilscheiben (11) ausgebildet ist, wobei die Profilscheiben (11) gegenüberliegende runde Bereiche mit Keilflanken (10) aufweisen, die in korrespondierende runde Bereiche mit Hinterschneidungsflanken (4) in der Ausnehmung (7) des Bauelementes (3) eingreifen, wobei in der Montagestellung die Profilscheiben (11) über das Scharnier (12) zueinander winklig angeordnet und nicht in einer Ebene liegend in die Ausnehmung (7) in dem Bauelement (3) einsetzbar und durch orthogonales Verschwenken in eine Arretierungsstellung verbringbar sind, in der die Profilscheiben (11) in einer Ebene liegen, wobei die Keilflanken (10) der Profilscheiben (11) in Eingriff mit den Hinterschneidungsflanken (4) des Bauelementes (3) gelangen.

5. Befestigungsanordnung (1) nach Anspruch 4, **dadurch gekennzeichnet, dass** das Aufnahmeelement (8) des Befestigungselementes (2) durch einen Spalt (13) geteilt und beide Teile mit je einer Profilscheibe (11) verbunden sind und dass die Arretierungsstellung des Befestigungselementes (2) über ein Arretierelement (5) in Form eines O-Rings (14) oder einer Rasthülse auf dem Aufnahmeelement (8) mechanisch reversibel fixierbar ist.

6. Befestigungsanordnung (1) nach Anspruch 4 oder 5, **dadurch gekennzeichnet, dass** das Scharnier (12) als Filmscharnier ausgebildet ist.

7. Befestigungsanordnung (1) nach einem der Ansprüche 1 bis 6, **dadurch gekennzeichnet, dass** das Befestigungselement (2) mittels additiver Herstellungsverfahren oder mit Urformverfahren erzeugt ist.

8. Befestigungsanordnung (1) nach einem der Ansprüche 1 bis 7, **dadurch gekennzeichnet, dass** das Aufnahmeelement (8) ein Arretierelement (5) für Bauteile aufweist, welches als Rastleiste oder als Wulstring ausgebildet ist.

9. Befestigungsanordnung (1) nach einem der Ansprüche 1 bis 8, **dadurch gekennzeichnet, dass** die Profilscheibe (11) eine Dicke von 3 mm aufweist und die Bauelemente (3) plattenförmig ausgebildet sind und eine 1,5- bis 2,5-fache Dicke der Profilscheibe (11) aufweisen.

10. Befestigungsanordnung (1) nach einem der Ansprüche 1 bis 9, **dadurch gekennzeichnet, dass** die Hinterschneidungsflanke (4) und die Keilflanke (10) einen Hinterschneidungs- und Keilwinkel (6) von 10 ° bis 60 ° aufweisen.

11. Befestigungsanordnung (1) nach einem der Ansprüche 1 bis 10, **dadurch gekennzeichnet, dass** das Aufnahmeelement (8) als Nutprofil ausgebildet ist.

## Claims

1. A fastening arrangement (1) for mechanically reversibly fixing a fastening element (2) in a structural element (3), wherein the fastening element (2) is formed from a profiled disc (11) with a wedge flank (10) and a receiving element (8) for components, and wherein the structural element (3) has a recess (7), which has an undercut flank (4) towards the surface of the structural element (3), wherein the fastening element (2) can be inserted into the recess (7) of the structural element (3) in an installation position and can be moved into a locking position, and wherein the wedge flank (10) of the profiled disc (11) corresponds form-fittingly with the undercut flank (4) of the structural element (3) when the fastening element (2) is in the locking position in the structural element (3), **characterised in that** the fastening element (2) is formed as a single part, and the profiled disc (11) of the fastening element (2) is formed as a circular disc with a cut edge (9), wherein the recess (7) of the structural element (3) correspondingly has a cut edge (9), and wherein the fastening element (2), in the installation position, can be inserted into the recess (7) with cut edges (9) offset from one another and can be brought into the locking position by horizontal pivoting, wherein the wedge flank (10) of the profiled disc (11) comes into engagement with the undercut flank (4) of the structural element (3).

2. The fastening arrangement (1) according to Claim 1, **characterised in that** the profiled disc (11) of the fastening element (2) fills the recess (7) of the structural element (3) in a flush manner when in the locking position.

3. The fastening arrangement (1) according to Claim 1 or 2, **characterised in that** the horizontal pivoting of the profiled disc (11) from the installation position into the locking position is designed as a rotary catch in the face or as a rotary catch at the edge, wherein the wedge flank (10) of the profiled disc (11) comes into engagement with the undercut flank (4) of the structural element (3).

4. A fastening arrangement (1) for mechanically reversibly fixing a fastening element (2) in a structural element (3), wherein the fastening element (2) is formed from a profiled disc (11) with a wedge flank (10) and a receiving element (8) for components, and wherein the structural element (3) has a recess (7), which has an undercut flank (4) towards the surface of the structural element (3), wherein the fastening element (2) can be inserted into the recess (7) of the structural element (3) in an installation position and can be moved into a locking position, and wherein the wedge flank (10) of the profiled disc (11) corresponds form-fittingly with the undercut flank (4) of the structural element (3) when the fastening element (2) is in the locking position in the structural element (3), **characterised in that** the fastening element (2) is formed as a single part, and the fastening element (2) is formed from two profiled discs (11) connected via a hinge (12), wherein the profiled discs (11) have opposing round regions with wedge flanks (10), which engage in corresponding round regions with undercut flanks (4) in the recess (7) of the structural element (3), wherein, in the installation position, the profiled discs (11) can be inserted into the recess (7) in the structural element (3) while arranged at an angle to one another via the hinge (12) and not lying in one plane and can be brought by orthogonal pivoting into a locking position in which the profiled discs (11) lie in one plane, wherein the wedge flanks (10) of the profiled discs (11) come into engagement with the undercut flanks (4) of the structural element (3).

5. The fastening arrangement (1) according to Claim 4, **characterised in that** the receiving element (8) of the fastening element (2) is divided by a gap (13), and both parts are connected to one profiled disc (11) each, and that the locking position of the fastening element (2) is mechanically reversibly fixable via a locking element (5) in the form of an O-ring (14) or a locking sleeve on the receiving element (8).

6. The fastening arrangement (1) according to Claim 4 or 5, **characterised in that** the hinge (12) is designed as a film hinge.

7. The fastening arrangement (1) according to one of Claims 1 to 6, **characterised in that** the fastening element (2) is produced by means of additive manufacturing methods or using primary forming methods.

8. The fastening arrangement (1) according to one of Claims 1 to 7, **characterised in that** the receiving element (8) has a locking element (5) for components, which is designed as a locking strip or beaded ring.

9. The fastening arrangement (1) according to one of Claims 1 to 8, **characterised in that** the profiled disc (11) has a thickness of 3 mm, and the structural elements (3) are planar and have 1.5 to 2.5 times the thickness of the profiled disc (11).

10. The fastening arrangement (1) according to one of Claims 1 to 9, **characterised in that** the undercut flank (4) and the wedge flank (10) have an undercut and wedge angle (6) of 10° to 60°.

11. The fastening arrangement (1) according to one of Claims 1 to 10, **characterised in that** the receiving element (8) is designed as a groove profile.

## Revendications

1. Dispositif de fixation (1) pour la fixation mécanique et réversible d'un élément de fixation (2) dans un élément de construction (3), l'élément de fixation (2) étant formé d'un disque profilé (11) avec un flanc de coin (10) et un élément de réception (8) pour des composants et l'élément de construction (3) présentant un évidement (7) qui présente un flanc de contre-dépouille (4) vers la surface de l'élément de construction (3), l'élément de fixation (2) étant insérable dans l'évidement (7) de l'élément de construction (3) dans une position de montage et étant déplaçable dans une position d'arrêt, et le flanc de coin (10) du disque profilé (11) correspondant par complémentarité de forme au flanc de contre-dépouille (4) de l'élément de construction (3) dans la position d'arrêt de l'élément de fixation (2) dans l'élément de construction (3), **caractérisé en ce que** l'élément de fixation (2) est réalisé d'une seule pièce et le disque profilé (11) de l'élément de fixation (2) est réalisé sous forme de disque circulaire avec une entaille (9), l'évidement (7) de l'élément de construction (3) présentant une entaille (9) de manière correspondante et l'élément de fixation (2) étant insérable dans l'évidement (7) en position de montage avec des entailles (9) décalées l'une par rapport à l'autre et apte à être amené en position d'arrêt par pivotement horizontal, le flanc de coin (10) du disque profilé (11) venant en prise avec le flanc de contre-dépouille (4) de l'élément de construction (3).

2. Dispositif de fixation (1) selon la revendication 1, **caractérisé en ce que** le disque profilé (11) de l'élément de fixation (2) remplit à fleur l'évidement (7) de l'élément de construction (3) dans la position d'arrêt.

3. Dispositif de fixation (1) selon la revendication 1 ou 2, **caractérisé en ce que** le pivotement horizontal du disque profilé (11) de la position de montage à la position d'arrêt est réalisé sous la forme d'un arrêt de rotation dans la surface ou d'un arrêt de rotation sur le bord, le flanc de coin (10) du disque profilé (11) venant en prise avec le flanc de contre-dépouille (4) de l'élément de construction (3).

4. Dispositif de fixation (1) pour la fixation mécanique et réversible d'un élément de fixation (2) dans un élément de construction (3), l'élément de fixation (2) étant formé d'un disque profilé (11) avec un flanc de coin (10) et un élément de réception (8) pour des composants et l'élément de construction (3) présentant un évidement (7) qui présente un flanc de contre-dépouille (4) vers la surface de l'élément de construction (3), l'élément de fixation (2) étant insérable dans l'évidement (7) de l'élément de construction (3) dans une position de montage et étant déplaçable dans une position d'arrêt, et le flanc de coin (10) du disque profilé (11) correspondant par complémentarité de forme avec le flanc de contre-dépouille (4) de l'élément de construction (3) dans la position d'arrêt de l'élément de fixation (2) dans l'élément de construction (3), **caractérisé en ce que** l'élément de fixation (2) est réalisé d'une seule pièce et que l'élément de fixation (2) est formé de deux disques profilés (11) reliés par une charnière (12), les disques profilés (11) présentant des zones rondes opposées avec des flancs de coin (10) qui s'engagent dans des zones rondes correspondantes avec des flancs de contre-dépouille (4) dans l'évidement (7) de l'élément de construction (3), dans la position de montage, les disques profilés (11) étant disposés en angle l'un par rapport à l'autre par l'intermédiaire de la charnière (12) et, ne se trouvant pas dans un plan, étant insérables dans l'évidement (7) dans l'élément de construction (3) et apte à être amenés par pivotement orthogonal dans une position d'arrêt dans laquelle les disques profilés (11) se trouvent dans un plan, les flancs de coin (10) des disques profilés (11) venant en prise avec les flancs de contre-dépouille (4) de l'élément de construction (3).

5. Dispositif de fixation (1) selon la revendication 4, **caractérisé en ce que** l'élément de réception (8) de l'élément de fixation (2) est divisé par une fente (13) et les deux parties sont reliées chacune à un disque profilé (11) et **en ce que** la position d'arrêt de l'élément de fixation (2) étant fixable mécaniquement de manière réversible sur l'élément de réception (8) par l'intermédiaire d'un élément d'arrêt (5) sous la forme d'un joint torique (14) ou d'une douille d'arrêt.

6. Dispositif de fixation (1) selon la revendication 4 ou 5, **caractérisé en ce que** la charnière (12) est réalisée comme une charnière à film.

7. Dispositif de fixation (1) selon l'une des revendications 1 à 6, **caractérisé en ce que** l'élément de fixation (2) est produit par des procédés de fabrication additive ou par des procédés de formage.

8. Dispositif de fixation (1) selon l'une des revendications 1 à 7, **caractérisé en ce que** l'élément de réception (8) présente un élément d'arrêt (5) pour des composants, qui est réalisé sous la forme d'une barre d'arrêt ou d'une bague à bourrelet.

9. Dispositif de fixation (1) selon l'une des revendications 1 à 8, **caractérisé en ce que** le disque profilé (11) présente une épaisseur de 3 mm et les éléments de construction (3) sont réalisés en forme de plaque et présentent une épaisseur de 1,5 à 2,5 fois celle du disque profilé (11).

10. Dispositif de fixation (1) selon l'une des revendications 1 à 9, **caractérisé en ce que** le flanc de contre-dépouille (4) et le flanc de coin (10) présentent un angle de contre-dépouille et de coin (6) compris entre 10° et 60°.

11. Dispositif de fixation (1) selon l'une des revendications 1 à 10, **caractérisé en ce que** l'élément de réception (8) est réalisé sous forme de profilé rainuré.
